# DEMANDE DE BREVET EUROPEEN

(11) **EP 4 647 332 A1**
(43) Date de publication de la demande: **12.11.2025**
(21) Numéro de dépôt: 25172394.6
(22) Date de dépôt: 24.04.2025
(51) Int. Cl.: B63B 35/38, E02B 3/06

(54) **MODULE DESTINÉ À ÊTRE AU MOINS EN PARTIE IMMERGÉ AVEC PROLONGEMENT EN SAILLIE**

(30) Priorité: 07.05.2024 FR 2404817
(71) Demandeur: Safier Ingenierie, 77700 Serris (FR)
(72) Inventeur: SAFIER, Elchanan, 77580 CRECY LA CHAPELLE (FR)
(74) Mandataire: Ex Materia

(57) **Abrégé**

La présente invention concerne un module destiné à être au moins en partie immergé (1) s'étendant entre une première extrémité longitudinale (4) et une deuxième extrémité longitudinale (6) et comprenant un fond (20) et une pluralité de parois latérales (12) définissant un volume interne (14), le module (1) comprenant au moins une extension (34) s'étendant, à l'une des extrémités longitudinales (4, 6), à partir d'une face externe (18) de l'une des parois latérales (12), le module (1, 1A, 1B) comprend au moins un prolongement (36) qui s'étend au moins dans un plan d'allongement principal de l'extension (34) et au-delà d'un plan dans lequel s'inscrivent des bords (32) des parois latérales (12).

## Description

La présente invention concerne le domaine des structures flottantes, telles que des îles artificielles ou des pontons, et plus particulièrement des modules flottants qui composent ces structures flottantes.

Il est connu de l'art antérieur de réaliser des structures flottantes dites monolithiques, c'est-à-dire des structures flottantes formées d'un unique élément structurel. Ces structures flottantes monolithiques présentent toutefois l'inconvénient de posséder des dimensions limitées ne permettant pas de réaliser une structure flottante adaptée aux dimensions recherchées, ou encore de nécessiter des infrastructures spécifiques lors de leur fabrication ou de leur transport depuis leur site de fabrication vers un site de destination, ce qui augmente considérablement leur coût de fabrication.

Afin de répondre à ces problématiques, il est connu de fabriquer des structures flottantes dites modulaires. Ces structures flottantes modulaires comprennent plusieurs modules flottants distincts qui sont assemblés les uns aux autres pour former une structure flottante modulaire de dimensions souhaitées.

Les structures flottantes, qu'elles soient monolithiques ou modulaires, nécessitent du fait de leur nature flottante des moyens capables d'assurer leur stabilité et celle des éléments qu'elles portent. Les structures flottantes, puisqu'elles sont destinées à être éloignées de la terre ferme, doivent par ailleurs être fonctionnalisées afin de répondre aux besoins que cet éloignement implique. Une telle fonctionnalisation implique par exemple de s'adapter à des contraintes liées à l'environnement dans lequel se trouve la structure flottante.

La présente invention s'inscrit dans ce contexte en proposant un caisson flottant destiné à être intégré au sein d'une structure flottante, le caisson flottant étant équipé de moyens de stabiliser et/ou de rendre plus fonctionnelle la structure flottante.

La présente invention a ainsi pour principal objet un module destiné à être au moins en partie immergé, s'étendant entre une première extrémité longitudinale et une deuxième extrémité longitudinale et comprenant un fond et une pluralité de parois latérales définissant un volume interne, le module comprenant au moins une extension s'étendant, à l'une des extrémités longitudinales, à partir d'une face externe de l'une des parois latérales. Selon l'invention, le module comprend au moins un prolongement qui s'étend au moins dans un plan d'allongement principal de l'extension et au-delà d'un plan dans lequel s'inscrivent des bords des parois latérales.

Le module destiné à être au moins en partie immergé selon l'invention est par exemple un caisson en béton destiné à former une structure destinée à être au moins en partie immergée telle qu'une île artificielle ou encore une plateforme. On entend par « au moins partiellement immergé » que le module est soit flottant, soit totalement immergé, notamment dans le cas d'un module reposant sur le fond marin. Le module présente par exemple une forme générale cubique, avec un fond et des parois latérales au sein desquels est délimité un volume interne du module. Une face interne des parois latérales est en regard du volume interne tandis qu'une face externe est opposée à celui-ci. Au moins une des parois latérales est équipée d'une extension, issue de matière avec la paroi latérale, qui fait saillie de sa face externe. Plus particulièrement, l'extension fait saillie de la paroi latérale en ce qu'elle s'étend au-delà de son plan principal d'allongement ; autrement dit, elle s'étend à distance du volume interne. L'extension fait par ailleurs saillie de la paroi latérale en ce qu'elle s'étend au-delà d'un flanc longitudinal de la paroi latérale. Cette extension est configurée pour permettre la jonction entre deux modules attenants. Elle est à cet effet destinée à être recouverte au moins partiellement de béton.

Les parois latérales présentent des bords, les bords de chacune des parois latérales s'étendant dans un même plan. Ce plan est par exemple sensiblement parallèle au fond du module ou bien confondu avec celui-ci. Selon l'invention, le module comprend un prolongement qui s'étend, dans la continuité de l'extension, au-delà du plan dans lequel s'étendent les bords des parois latérales. Par exemple, le prolongement s'étend au-delà du fond du module.

Le prolongement permet, selon sa disposition, d'améliorer la stabilité et/ou la fonctionnalité du module qu'il équipe. À titre d'exemple, le prolongement sert par exemple de protection contre les vagues, en empêchant l'eau de rentrer dans le module ; de réservoir de stockage ; de pied de support contre le fond marin ; de base pour un élément dressé sur le module...

Selon une caractéristique optionnelle de l'invention, le prolongement s'étend au moins le long d'un plan sécant à un plan du fond.

Le prolongement s'étend ainsi de sorte à augmenter une hauteur du module mesurée au droit de son fond. Le prolongement présente une dimension, mesurée le long d'une direction sécante et par exemple perpendiculaire au fond, d'au moins un mètre. Une telle dimension est par exemple une dimension minimale suffisante pour empêcher les vagues de passer par-dessus l'extension, assurant ainsi l'étanchéité du module.

Selon une caractéristique optionnelle de l'invention, le prolongement comprend au moins une cloison qui s'étend dans un plan commun à un plan d'allongement principal de la paroi latérale porteuse de l'extension et une portion faisant saillie de la cloison et s'étendant dans le plan d'allongement principal de l'extension.

Autrement dit, la cloison est dans la continuité de la paroi latérale selon une direction s'étendant dans le plan sécant au fond, et la portion en saillie est dans la continuité de l'extension selon cette même direction. La cloison et la portion en saillie sont issues de matière.

Selon une caractéristique optionnelle de l'invention, les parois latérales comprennent une première paroi latérale et une deuxième paroi latérale s'étendant dans des plans distincts, le prolongement comprenant une première cloison qui s'étend dans un plan commun à un plan d'allongement principal de la première paroi latérale, une deuxième cloison qui s'étend dans un plan commun à un plan d'allongement principal de la deuxième paroi latérale, et un muret joignant la première cloison et la deuxième cloison.

On comprend que la première paroi latérale et la deuxième paroi latérale sont toutes deux porteuses d'une extension. À titre d'exemple non limitatif, la première paroi latérale et la deuxième paroi latérale s'étendent dans des plans parallèles. Le muret relie la première cloison et la deuxième cloison sur toute une dimension de ces cloisons mesurée le long de la direction s'étendant dans le plan sécant au fond. Le muret joint la première cloison et la deuxième cloison à des extrémités de celles-ci. Le muret peut joindre la première cloison et la deuxième cloison soit selon une ligne droite, soit selon une forme plus complexe. De ce fait, selon les modes de réalisation une section de prolongement, réalisée dans un plan perpendiculaire aux parois latérales, présente des formes différentes. La section du prolongement peut par exemple présenter une section en forme générale de "C", soit avec deux angles droits, c'est-à-dire en forme de demi-rectangle ou de demi-carré, soit avec une courbe continue, c'est-à-dire en forme de demi-cercle ou de demi-ovale. Alternativement, la section du prolongement peut présenter une forme de demi-triangle ou encore de demi-hexagone.

Selon une caractéristique optionnelle de l'invention, le module comprend un plafond reliant les parois latérales à l'opposé du fond et participant à délimiter le volume interne.

Le plafond s'étend ainsi dans un plan parallèle et distinct du fond. Dans des modes de réalisation alternatifs, le module est ouvert, c'est-à-dire qu'il est dépourvu de plafond.

Selon une caractéristique optionnelle de l'invention, le plafond comprend une portion qui forme un plancher du prolongement, le plancher, les cloisons et le muret délimitant au moins partiellement un logement interne du prolongement.

Ceci correspond à un premier mode de réalisation du module selon l'invention, dans lequel le muret fait saillie du plancher du prolongement. Le prolongement du module selon le premier mode de réalisation correspond par exemple à une base d'une structure érigée sur le module, telle qu'une éolienne, ou encore à un moyen permettant d'arrêter les vagues.

Selon une caractéristique optionnelle de l'invention, le fond comprend une portion qui forme un toit du prolongement, le toit, les cloisons et le muret délimitant au moins partiellement un logement interne du prolongement.

Ceci correspond à un premier mode de réalisation du module selon l'invention, dans lequel le muret fait saillie du toit du prolongement. Le prolongement du module selon le deuxième mode de réalisation correspond par exemple à un réservoir de stockage de matériel. Le réservoir de stockage participe à la fonction de stabilité en répartissant le poids des éléments stockés au sein de la structure comprenant le module. Alternativement, le prolongement du module selon le deuxième mode de réalisation est configuré pour former un pied du module, ce pied étant destiné à reposer sur le fond marin. La stabilité du module, et le cas échéant de la structure, est alors assurée en empêchant une dérive notamment due à des courants marins ou à des vagues.

Selon une caractéristique optionnelle de l'invention, les parois latérales comprennent au moins une paroi latérale d'extrémité solidaire de la paroi latérale à partir de laquelle s'étend l'extension, la paroi latérale d'extrémité et l'extension participant à délimiter une cavité.

La paroi latérale d'extrémité est par exemple perpendiculaire à la paroi latérale porteuse de l'extension, ainsi que perpendiculaire au plan principal d'allongement de l'extension elle-même. La paroi latérale d'extrémité et l'extension délimitent une cavité, qui lorsqu'elle est mise en regard d'une cavité d'un module adjacent participe à former un creux qui permet la liaison des deux modules, le cas échéant en remplissant une partie du creux avec du béton.

Selon une caractéristique optionnelle de l'invention, le muret s'étend dans un plan d'allongement principal de la paroi latérale d'extrémité.

Selon une caractéristique optionnelle de l'invention, le muret s'étend principalement dans un plan parallèle et distinct à un plan d'allongement principal de la paroi latérale d'extrémité.

Il s'agit ici de deux variantes de réalisation du muret ; soit le muret est dans la continuité de la paroi latérale d'extrémité selon la direction sécante au fond du caisson, soit il est décalé de celle-ci.

Selon une caractéristique optionnelle de l'invention, le logement interne est ouvert sur la cavité.

En d'autres termes, le logement interne et la cavité sont communicants.

Selon une caractéristique optionnelle de l'invention, le prolongement est amovible.

Selon une caractéristique optionnelle de l'invention, l'extension et le prolongement sont issus de matière.

Il s'agit ici de deux variantes de réalisation du prolongement ; soit celui-ci est associé de façon temporaire au reste du module, soit le prolongement est indissociable du reste du module sans destruction de l'un et/ou l'autre de ces éléments. Lorsque le prolongement est amovible, il peut être associé au module puis dissocié de celui-ci selon les besoins.

Selon une caractéristique optionnelle de l'invention, le module comprend une zone de réception configurée pour recevoir du béton, la zone de réception étant délimitée par un flanc longitudinal de la paroi latérale porteuse de l'extension et une face intérieure de l'extension.

La zone de réception correspond à la partie de la cavité qui est destinée à recevoir du béton en vue de solidariser deux modules l'un à l'autre. La zone de réception est en outre délimitée, au niveau du prolongement, par une extrémité libre de la cloison, c'est-à-dire une extrémité non solidarisée au muret, ainsi que par la portion en saillie par rapport à cette cloison.

Selon une caractéristique optionnelle de l'invention, le module comprend une première extension à l'une de ses extrémités longitudinales et une deuxième extension à l'autre de ses extrémités longitudinales, le module comprenant un premier prolongement s'étendant au moins dans un plan d'allongement principal de la première extension et un deuxième prolongement s'étendant au moins dans un plan d'allongement principal de la deuxième extension.

Ainsi, le module présente deux prolongements, soit un à chacune de ses extrémités longitudinales.

Selon une caractéristique optionnelle de l'invention, le module comprend un corps principal en béton.

Le corps principal du module comprend au moins ses parois latérales et son fond. Le cas échéant, le corps principal comprend également le plafond du module.

L'invention concerne en outre une structure destinée à être au moins en partie immergée, comprenant au moins un premier module tel qu'évoqué précédemment et un deuxième module tel qu'évoqué précédemment.

Le premier module et le deuxième module ont vocation à être solidarisés l'un avec l'autre afin de former la structure, une telle solidarisation étant permise par leurs extensions respectives.

Selon une caractéristique optionnelle de l'invention, le prolongement et l'extension du premier module sont en regard du prolongement et de l'extension du deuxième module, la structure comprenant un dispositif d'étanchéité intercalé entre d'une part le prolongement et l'extension du premier module et d'autre part le prolongement et l'extension du deuxième module.

La structure comprend par exemple un dispositif d'étanchéité unique, notamment un joint, disposé le long de l'une des extensions parmi la première extension et la deuxième extension. Le dispositif d'étanchéité s'étend par ailleurs le long d'une extrémité terminale de la portion en saillie du prolongement.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, une vue en perspective d'un module destiné à être au moins partiellement immergé selon l'invention, le module présentant une extension et un prolongement selon un premier mode de réalisation ;
[Fig. 2] illustre, schématiquement, une vue en coupe de deux modules présentant chacun un prolongement selon le premier mode de réalisation, ces deux modules étant destinés à être assemblés pour former une structure flottante selon l'invention ;
[Fig. 3] illustre, schématiquement, une vue de dessus des deux modules de la figure 2 ;
[Fig. 4] illustre, schématiquement, une vue en coupe des deux modules de la figure 2 assemblés l'un à l'autre ;
[Fig. 5] illustre, schématiquement, une autre vue en coupe des deux modules de la figure 2 assemblés l'un à l'autre ;
[Fig. 6] illustre, schématiquement, le module de la figure 1 équipé d'un premier prolongement selon le premier mode de réalisation et d'un deuxième prolongement selon le deuxième mode de réalisation, une portion centrale du module étant tronquée ;
[Fig. 7] illustre, schématiquement, une structure comprenant au moins un module selon le premier mode de réalisation ;
[Fig. 8] illustre, schématiquement, deux modules selon un deuxième mode de réalisation, ces deux modules étant destinés à être assemblés pour former une structure destinée à être au moins partiellement immergée selon l'invention ;
[Fig. 9] illustre, schématiquement, deux modules selon un troisième mode de réalisation, ces deux modules étant destinés à être assemblés pour former une structure destinée à être au moins partiellement immergée selon l'invention ;
[Fig. 10] illustre, schématiquement, une structure comprenant au moins un module selon le troisième mode de réalisation ;
[Fig. 11] illustre, schématiquement, des sections de différentes formes possibles du prolongement du module ;
[Fig. 12] illustre, schématiquement, des coupes de différentes formes possibles du module.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un module selon l'invention.

Une direction longitudinale correspond à une dimension d'extension principale du module, cette direction longitudinale étant parallèle à un axe longitudinal L d'un repère L, V, T illustré sur les figures. Une direction verticale correspond à une dimension perpendiculaire à un fond du module, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et à l'axe vertical V.

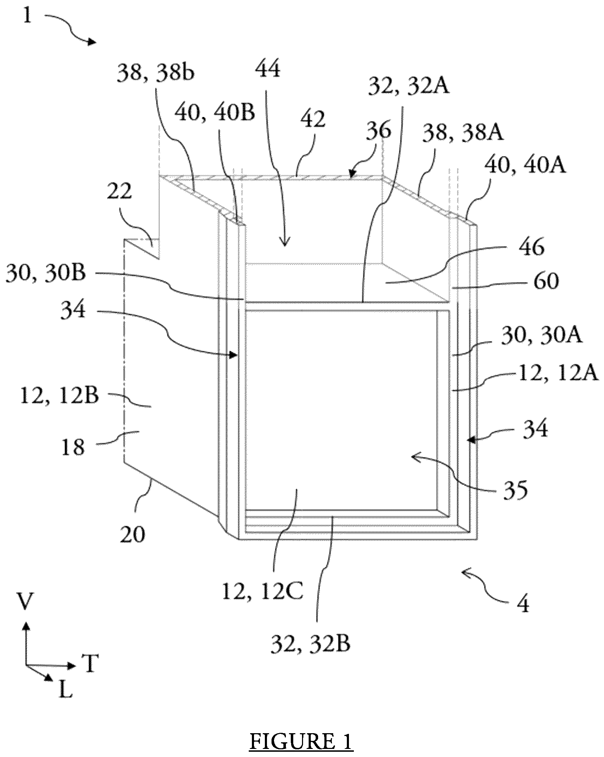

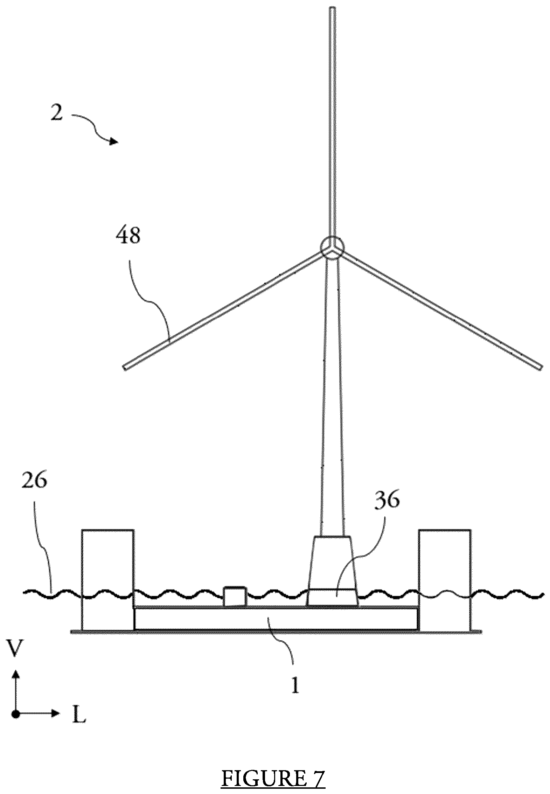

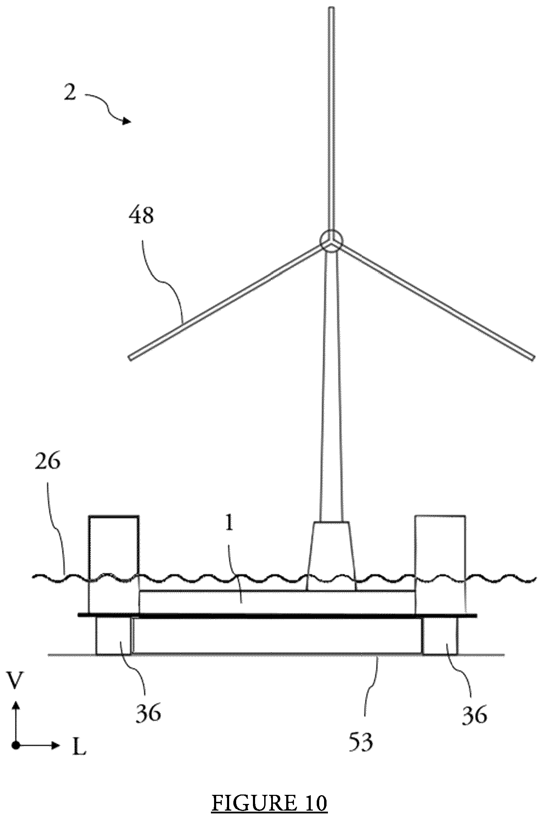

Les figures 1 illustrent ainsi, schématiquement, un module destiné à être au moins partiellement immergé 1 selon l'invention, ce module 1 étant par exemple destiné à être associé à un ou plusieurs autres modules 1 en vue de réaliser une structure destinée à être au moins partiellement immergée 2 telle qu'elle est représentée aux figures 7 et 10. Le module 1 est ici un module flottant. La structure 2 est par exemple destinée à former une plateforme ou une île artificielle. La structure 2 est ici une structure flottante mais l'invention couvre également une structure immergée en appui sur un fond d'un océan, d'une mer ou d'un lac. Dans un tel cas, la structure 2 peut être déplacée sur l'eau par flottaison, puis immergée à l'endroit souhaité.

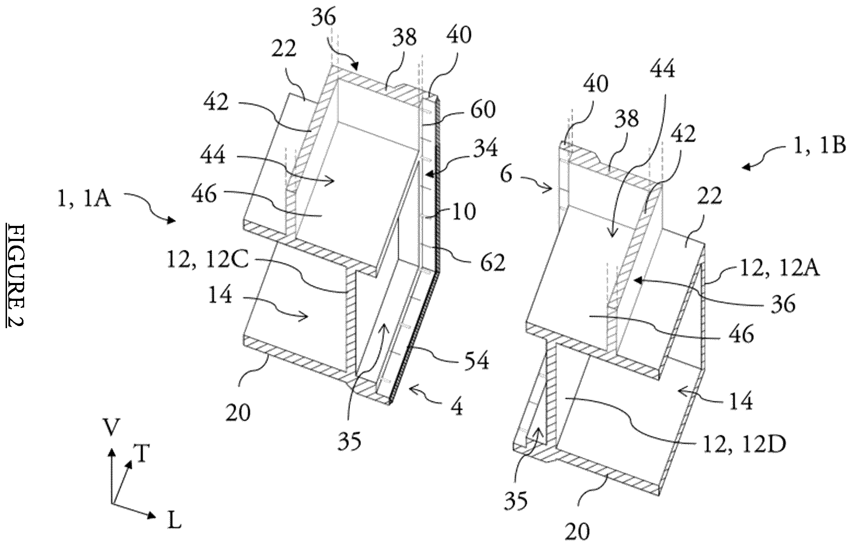

Le module 1 présente une direction d'extension principale qui correspond à une direction longitudinale L. Le module 1 s'étend, selon cette direction longitudinale L, entre une première extrémité longitudinale 4 et une deuxième extrémité longitudinale 6. Le module 1 est constitué d'un corps principal 8, par exemple en béton, ainsi que d'armatures métalliques 10 insérées dans le corps principal 8. Ces armatures métalliques 10 sont notamment représentées en pointillés aux figures 2 à 4.

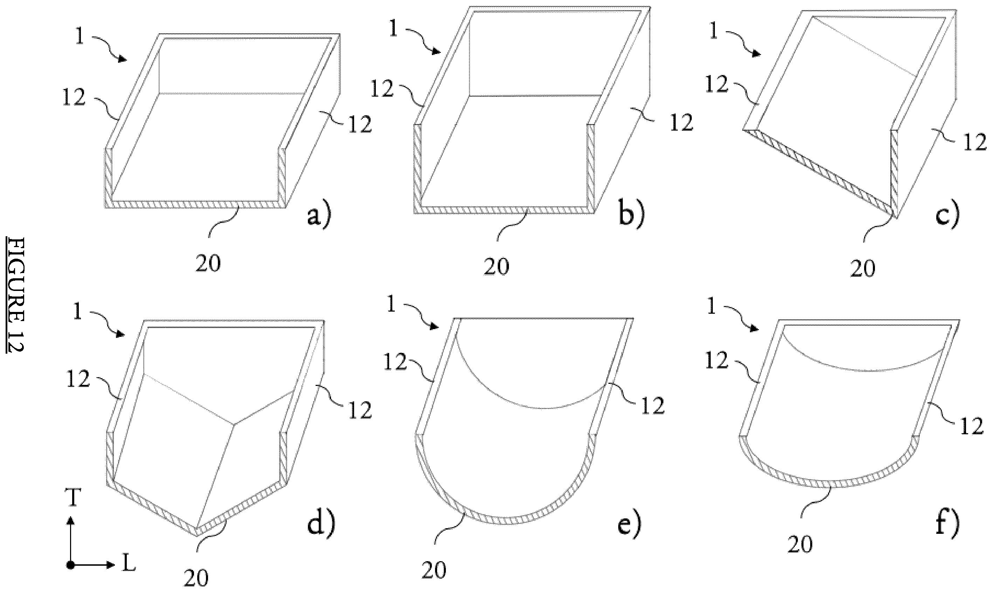

Le corps principal 8 du module 1 comprend une pluralité de parois latérales 12, ici au nombre de quatre. Les parois latérales 12 sont disposées de sorte à être parallèles deux à deux. Plus précisément, les parois latérales 12 comprennent une première paroi latérale 12A, une deuxième paroi latérale 12B ainsi que deux parois latérales d'extrémité 12C, 12D. Les parois latérales d'extrémité 12C, 12D bordent le module 1 à ses extrémités longitudinales 4, 6 et s'étendent ici dans des plans parallèles entre eux et perpendiculaires à la direction longitudinale L. Les première et deuxième parois latérales 12A, 12B relient les parois latérales d'extrémité 12C, 12D deux à deux et s'étendent ici dans des plans parallèles à la direction longitudinale L. La forme du module 1 décrite ici est donnée à titre indicatif ; ainsi, d'autres formes de module 1 peuvent être envisagées sans sortir de l'invention. Différents exemples de formes du module 1 sont illustrées à la figure 12, qui représente des coupes de vue en perspective du module 1.

Les parois latérales 12 délimitent entre elles un volume interne 14 du module 1. Ce volume interne 14 est plus particulièrement en regard d'une face interne 16 des parois latérales 12, qui présentent par ailleurs une face externe 18 opposée à leur face interne 16 et au volume interne 14.

Le volume interne 14 est, en sus des parois latérales 12, délimité par un fond 20 du module 1. Ce fond 20 est notamment visible à la figure 2. Il relie les parois latérales 12 les unes aux autres et s'étend sensiblement perpendiculairement à elles. Dans certains modes de réalisation, le volume interne 14 est enfin délimité par un plafond 22, de sorte à former un volume clos. Le plafond 22 s'étend alors sensiblement parallèlement au fond 20. Le fond 20 et le plafond 22 s'étendent dans des plans perpendiculaires à une direction verticale V du module 1.

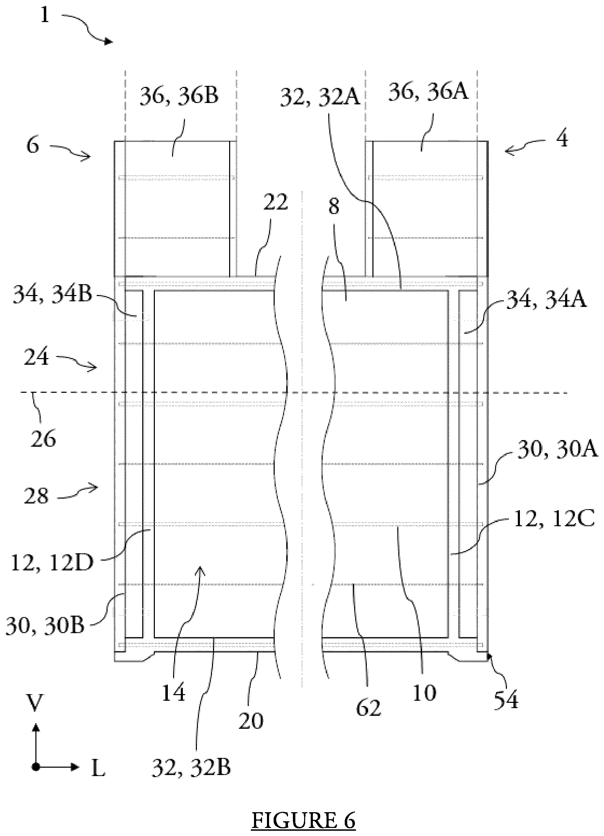

Le volume interne 14 est destiné à être rempli par un matériau ayant une densité inférieure à la densité de l'eau afin d'assurer la flottaison du module 1. Ainsi, une première partie 24 du module 1 est immergée, c'est-à-dire située sous une ligne d'eau 26, une deuxième partie 28 située à l'opposé du module par rapport à la première partie 24 selon la direction verticale V étant quant à elle émergée, c'est-à-dire située au-dessus de la ligne d'eau 26, dans l'air. La ligne d'eau 26 est représentée sous forme de tirets à la figure 6, sur laquelle figurent également les première et deuxième parties 24, 28, ainsi qu'aux figures 7 et 10.

Chacune de la première paroi latérale 12A et de la deuxième paroi latérale 12B est délimitée, selon la direction longitudinale L, par des flancs 30, avec un premier flanc 30A au niveau de la première extrémité longitudinale 4 du module 1 et un deuxième flanc 30B au niveau de la deuxième extrémité longitudinale 6. Les flancs 30 d'une paroi latérale 12 donnée participent à relier sa face interne 16 et sa face externe 18. Il est à noter que les flancs 30 des première et deuxième parois latérales 12A, 12B s'étendent en dehors du volume interne 14 du module 1 et des parois latérales d'extrémité 12C, 12D ; en d'autres termes, les flancs 30 dépassent du plan dans lequel s'inscrivent les parois latérales d'extrémité 12C, 12D et font saillie de celui-ci à l'opposé du volume interne 14.

Les parois latérales 12 sont par ailleurs délimitées, selon la direction verticale V, par des bords 32, parmi lesquels des bords inférieurs 32A et des bords supérieurs 32B, qui relient la face interne 16 d'une paroi latérale 12 donnée à sa face externe 18. Les bords inférieurs 32A des parois latérales 12 sont disposés au niveau du fond 20 du module 1 tandis que les bords supérieurs 32B sont disposés au voisinage du plafond 22. Toutes les parois latérales 12 ayant des dimensions, mesurées selon la direction verticale V, qui sont identiques, les bords inférieurs 32A de toutes les parois latérales 12 s'inscrivent dans un même plan sensiblement parallèle au fond 20 et les bords supérieurs 32B de toutes les parois latérales 12 s'inscrivent dans un même plan sensiblement parallèle à ce fond 20. À titre d'exemple, le plan dans lequel s'étendent les bords inférieurs 32A est confondu avec le fond 20 et le plan dans lequel s'étendent les bords supérieurs 32B est confondu avec le plafond 22.

Au moins l'une des parois latérales 12 est porteuse d'une extension 34. Dans les modes de réalisation représentés ici, et tel que cela est particulièrement visible à la figure 1, à la fois la première paroi latérale 12A et la deuxième paroi latérale 12B comprennent une telle extension 34. Ce qui va maintenant être décrit en relation avec l'extension 34 de la première paroi latérale 12A a ainsi vocation à s'appliquer, mutatis mutandis, à l'extension 34 de la deuxième paroi latérale 12B.

L'extension 34 est issue de matière avec la première paroi latérale 12A. Elle forme une saillie depuis la face externe 16 de la première paroi latérale 12A. On comprend ainsi que l'extension 34 s'étend parallèlement au plan principal d'allongement de la première paroi latérale 12A, de sorte à former une surépaisseur de cette première paroi latérale 12A mesurée au droit de son plan principal d'allongement. En d'autres termes, l'extension 34 fait saillie de la première paroi latérale 12A selon une direction transversale T qui est perpendiculaire au plan principal d'allongement de la première paroi latérale 12A. En outre, l'extension 34 s'étend, selon la direction longitudinale L, au-delà du flanc 30A de la première paroi latérale 12A ; elle forme donc un porte-à-faux par rapport à la première paroi latérale 12A.

Il est à noter que le fond 20 présente également une extension, qui s'étend parallèlement au plan principal d'allongement du fond 20 et au-delà de la première paroi latérale d'extrémité 12C. L'extension 34 de la première paroi latérale 12A, l'extension 34 de la deuxième paroi latérale 12B et l'extension du fond 20 participent à délimiter une cavité 35, qui est également délimitée par la première paroi latérale d'extrémité 12C. Au contraire, le plafond 22 est dépourvu d'une telle extension.

Afin d'assembler une pluralité de modules 1 pour former une structure 2 destinée à être au moins en partie immergée, de façon avantageuse au sein d'un module 1 donné les première et deuxième parois latérales 12A, 12B et le fond 20 présentent une première extension 34A au niveau de la première extrémité longitudinale 4 du module 1 et une deuxième extension 34B au niveau de la deuxième extrémité longitudinale 6. La présence d'une extension 34 à chacune des extrémités longitudinales 4, 6 du module 1, qui est particulièrement visible à la figure 6, permet de faciliter l'association des modules 1 les uns aux autres. Une telle association des modules 1 en vue de former la structure 2 sera décrite ultérieurement, relativement à un procédé d'assemblage de deux modules 1.

Selon l'invention, le module 1 comprend au moins un prolongement 36 qui permet d'améliorer la stabilité du module 1 et a fortiori de la structure 2, et/ou qui participe à les fonctionnaliser. De façon notable, et comme cela est illustré à la figure 6, un module 1 donné peut présenter un premier prolongement 36A au niveau de sa première extrémité longitudinale 4 et un deuxième prolongement 36B au niveau de sa deuxième extrémité longitudinale 6. Ce qui est décrit ci-après en relation avec un prolongement 34 est de ce fait applicable à la fois au premier prolongement 36A et au deuxième prolongement 36B.

Le prolongement 36 a vocation à augmenter une dimension du module 1 selon la direction verticale V. Le prolongement 36 s'étend donc au moins le long de cette direction verticale V. Plus spécifiquement, le prolongement 36 s'étend le long de la direction verticale V sur au moins un mètre ; en d'autres termes, le prolongement 36 mesure une hauteur d'au moins un mètre. Bien que le prolongement 36 soit représenté ici comme s'étendant perpendiculairement au fond 20, on pourrait imaginer sans sortir du cadre de l'invention des modes de réalisation différents dans lesquels le prolongement 36 s'étendrait dans un plan sécant mais non perpendiculaire au plan dans lequel s'étend principalement le fond 20.

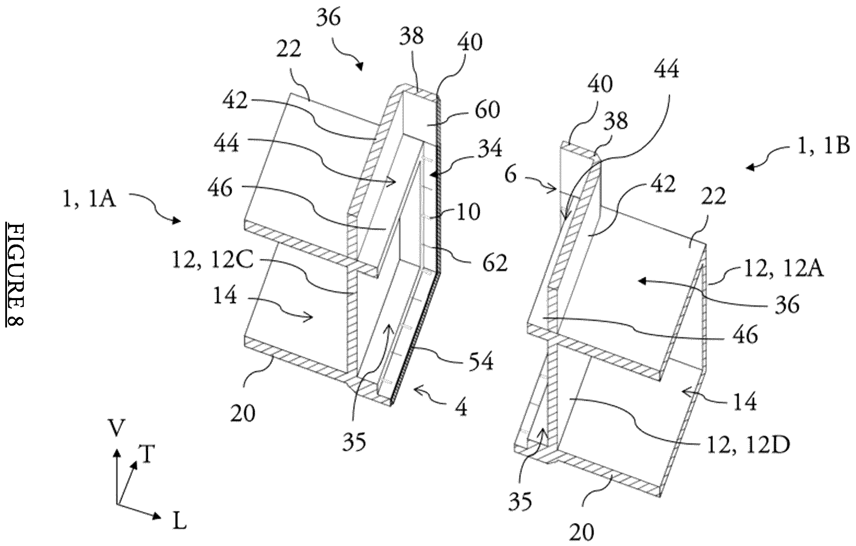

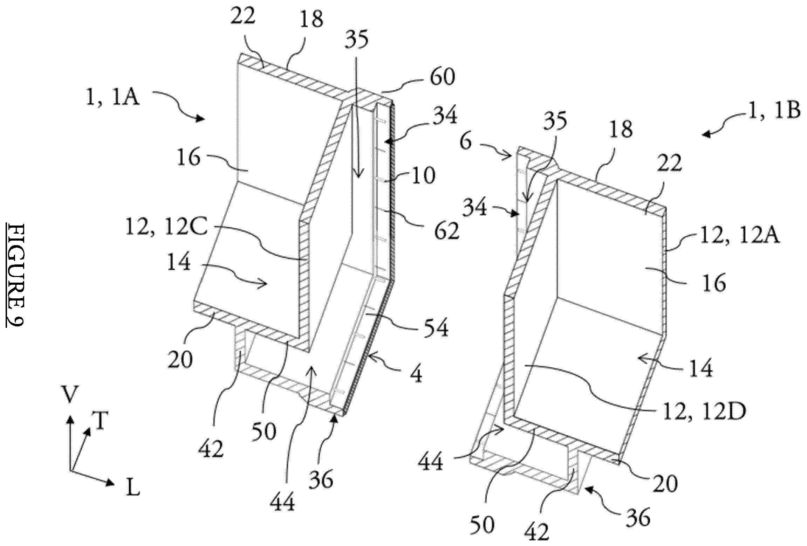

Ainsi, le prolongement 36 s'étend d'une part au moins dans un plan d'allongement principal de l'extension 34 et d'autre part au-delà du plan dans lequel s'inscrivent les bords 32 des parois latérales 12. Le prolongement 36 peut présenter, selon les besoins du module 1, différentes configurations. Le prolongement 36 est ainsi représenté selon un premier mode de réalisation aux figures 1 à 6, selon un deuxième mode de réalisation à la figure 8 et selon un troisième mode de réalisation à la figure 9. Sauf mention contraire ou incompatibilité évidente, ce qui va maintenant être décrit en relation avec l'un ou l'autre de ces modes de réalisation est destiné à s'appliquer mutatis mutandis aux autres modes de réalisation.

Dans le premier mode de réalisation, c'est-à-dire sur les figures 1 à 6, le prolongement 36 est disposé au moins partiellement en recouvrement du plafond 22 et de l'extension 34. En d'autres termes, selon la direction verticale V le module 1 comprend le fond 20, les parois latérales 12, le plafond 22 et le prolongement 36. Similairement, au niveau de la première extrémité longitudinale 4, le module 1 présente l'extension du fond 20, l'extension 34 de la première paroi latérale 12A et le prolongement 36.

Le prolongement 36 comprend plus précisément, pour chacune de la première paroi latérale 12A et de la deuxième paroi latérale 12B, une cloison 38 et une portion 40 qui fait saillie de la cloison 38, aussi appelée portion en saillie 40. On comprend qu'il existe ainsi une première cloison 38A et une première portion en saillie 40A pour la première paroi latérale 12A, et une deuxième cloison 38B et une deuxième portion en saillie 40B pour la deuxième paroi latérale 12B.

La cloison 38 s'étend, le long de la direction verticale V, dans la continuité de la paroi latérale 12, c'est-à-dire dans le plan d'allongement principal de cette paroi latérale 12. Similairement, la portion en saillie 40 s'étend, le long de la direction verticale V, dans la continuité de l'extension 34, c'est-à-dire dans le plan d'allongement principal de cette extension 34. La cloison 38 s'étend, selon la direction longitudinale L, jusqu'au plan dans lequel s'inscrit le premier flanc 30A de la paroi latérale 12. La portion en saillie 40 fait saillie de la cloison 38 du fait du décalage susmentionné entre la paroi latérale 12 et l'extension 34 selon la direction transversale T, de sorte à suivre la forme de l'extension 34.

En sus de la cloison 38 et de la portion en saillie 40, le prolongement 36 comprend un muret 42. Ce muret 42 relie la première cloison 38A qui est dans la continuité de la première paroi latérale 12A à la deuxième cloison 38B qui est dans la continuité de la deuxième paroi latérale 12B. Plus spécifiquement, le muret 42 relie une extrémité des cloisons 38 qui est opposée à leur extrémité porteuse de la portion en saillie 40 ; autrement dit, le muret 42 relie l'extrémité des cloisons 38 qui est opposée, selon la direction longitudinale L, à la portion en saillie 40. Les cloisons 38, les portions en saillie 40 et le muret 42 s'étendent ici au-delà du plan dans lequel s'inscrivent les bords supérieurs 32B des parois latérales 12, à l'opposé du volume interne 14.

Le muret 42 présente une hauteur, c'est-à-dire une dimension mesurée selon la direction verticale V, égale à celle des cloisons 38 et des portions en saillie 40. En outre, les cloisons 38, les portions en saillie 40 et le muret 42 sont issus de matière, c'est-à-dire réalisés par continuité de matière. Le cas échéant, ces éléments sont issus de matière avec le corps principal 8 du module 1.

Le muret 42 forme ici un angle droit avec la première cloison 38A et un angle droit avec la deuxième cloison 38 B, mais d'autres angles de jonction entre le muret 42 et les cloisons 38 peuvent être envisagés sans sortir du cadre de l'invention.

Le muret 42, la première cloison 38A et la deuxième cloison 38B participent à délimiter un logement interne 44 du prolongement 36. Dans ce premier mode de réalisation, le logement interne 44 est également délimité par une portion du plafond 22 qui forme un plancher 46 du prolongement 36. On comprend ainsi que le muret 42 repose sur le plafond 22 du module 1 ; en d'autres termes, le muret 42 fait saillie de ce plancher 22. Dans ce cas, le muret 42 est décalé, selon la direction longitudinale L, par rapport au plan d'allongement principal de la première paroi latérale d'extrémité 12C. Autrement dit, le muret 42 s'étend principalement dans un plan distinct, par exemple parallèle et distinct, du plan d'allongement principal de la première paroi latérale d'extrémité 12C.

Le plancher 46 du prolongement 36 s'étend jusqu'aux premiers flancs 30A des première et deuxième parois latérales 12, de sorte qu'il s'étend en porte-à-faux au-dessus de la cavité 35 de l'extension 34. Toutefois, le plancher 46 ne s'étend pas au-delà de ces premiers flancs 30A selon la direction longitudinale L. Il en résulte que le logement interne 44 est ouvert sur la cavité 35, et communique avec celle-ci.

Le prolongement 36 selon le premier mode de réalisation a notamment vocation à empêcher les vagues de rentrer au sein du module 1, et notamment au sein de la cavité 35. Ceci est possible grâce à la disposition du prolongement, qui augmente la hauteur du module 1 selon un sens de la direction verticale V allant du fond 20 au plafond 22. Alternativement ou additionnellement, le prolongement 36 selon le premier mode de réalisation forme, au sein de la structure 2 telle qu'elle est illustrée à la figure 7, une base pour un élément érigé sur la structure 2. Le prolongement 36 constitue ici une fondation d'une éolienne 48.

Le prolongement 36 selon la deuxième mode de réalisation va désormais être décrit en relation avec la figure 8. Le prolongement 36 selon le deuxième mode de réalisation se distingue du prolongement 36 selon le premier mode de réalisation tout d'abord en raison de la disposition de son muret 42. En effet, et tel que cela est visible à la figure 8, le muret 42 s'étend ici dans un plan confondu avec la première paroi latérale d'extrémité 12C. En d'autres termes, le muret 42 est dans la continuité de cette première paroi latérale d'extrémité 12C selon la direction verticale V.

En outre, dans ce deuxième mode de réalisation le prolongement 36 n'est pas issu de matière avec le reste du module 1. Le prolongement 36, s'il est bien réalisé en béton à l'instar du corps principal 8 du module 1, est ici amovible. Le prolongement 36 est par exemple solidarisé au corps principal 8 à l'aide de moyens de fixation tels que des boulons. Le prolongement 36 peut ainsi être adjoint au corps principal 8 du module 1 ou bien retiré de celui-ci en fonction des besoins. À l'instar du prolongement 36 selon le premier mode de réalisation, le prolongement 36 selon le deuxième mode de réalisation est par exemple utilisé au sein de la structure 2 en tant que moyen de protection contre les vagues.

Le prolongement 36 selon le troisième mode de réalisation est illustré à la figure 9. Il diffère des premier et deuxième modes de réalisation notamment en ce qu'il est disposé en regard du fond 20 du module 1 plutôt que de son plafond 22. De ce fait, le muret 42 fait saillie du fond 20, selon la direction verticale V, à l'opposé du volume interne 14 du module 1. De plus, ce fond 20 comprend une portion qui forme un toit 50 du prolongement 36. Le logement interne 44, qui est ouvert sur la cavité 35, est donc délimité par les cloisons 38, les portions en saillie 40, le muret 42, le toit 50 ainsi qu'une paroi de sol 52 du prolongement 36. Cette paroi de sol 52 s'étend principalement de façon sensiblement parallèle au toit 50, c'est-à-dire au fond 20 du module 1, et elle joint les cloisons 38, les portions en saillie 40 et le muret 42.

Les cloisons 38, les portions en saillie 40 et le muret 42 s'étendent ici au-delà du plan dans lequel s'inscrivent les bords inférieurs 32A des parois latérales, à l'opposé du volume interne 14. Ainsi, le prolongement 36 selon le troisième mode de réalisation augmente la hauteur du module 1 selon un sens de la direction verticale V allant du plafond 22 au fond 20. Par ailleurs, dans ce troisième mode de réalisation, contrairement à ce qui a été décrit auparavant le fond 20 est dépourvu d'extension. Plutôt, l'extension est portée par la paroi de sol 52.

Le prolongement 36 selon le troisième mode de réalisation permet notamment de ménager, au sein du module 1, un réservoir de stockage dont un espace disponible correspond au logement interne 44. Alternativement ou additionnellement, le prolongement 36 selon le troisième mode de réalisation forme, au sein de la structure 2 telle qu'elle est illustrée à la figure 10, un pied pour la structure 2. Un tel pied permet par exemple de relier la structure 2 au fond marin 53, et ainsi d'empêcher sa dérive.

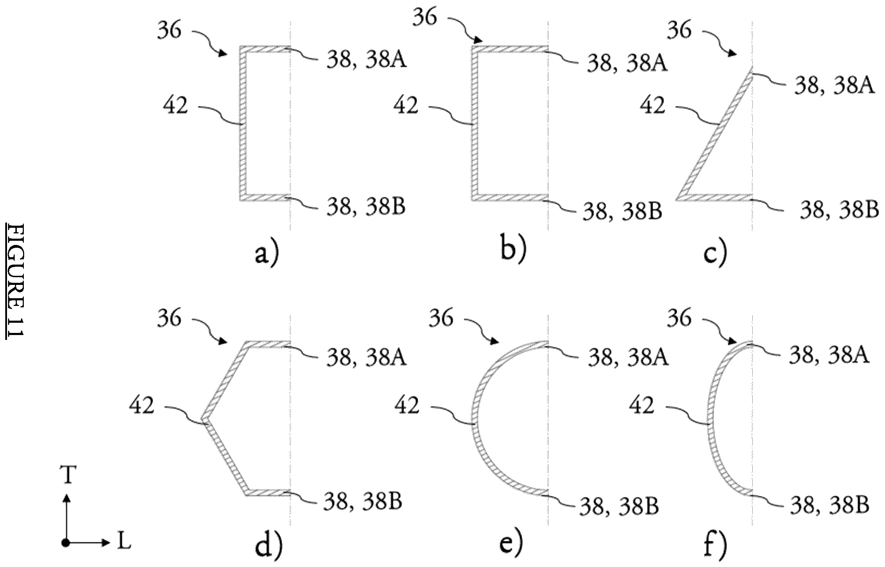

Tel qu'évoqué précédemment, diverses formes du muret 42 peuvent être envisagées, et ce que ce soit pour le premier mode de réalisation, pour le deuxième mode de réalisation ou pour le troisième mode de réalisation. Ceci conduit à diverses formes du prolongement 36, lorsque celui-ci est observé selon une section réalisée dans un plan longitudinal-transversal. Ces diverses formes sont illustrées dans les variantes de la figure 11. Plus précisément, le prolongement 36 peut présenter une forme de demi-rectangle ou de demi-carré, tel que représenté aux figures 11a et 11b. Alternativement, le prolongement 36 peut être en forme de demi-rond ou de demi-ovale, comme cela est illustré aux figures 11e et 11f. Le prolongement 36 peut aussi avoir une forme de demi-triangle ou de demi-hexagone, comme figuré respectivement aux figures 11c et 11d. De façon générale, le prolongement 36 peut prendre toute autre forme sans sortir du cadre de l'invention dès lors que cette forme n'est pas incompatible avec ce qui a été décrit précédemment.

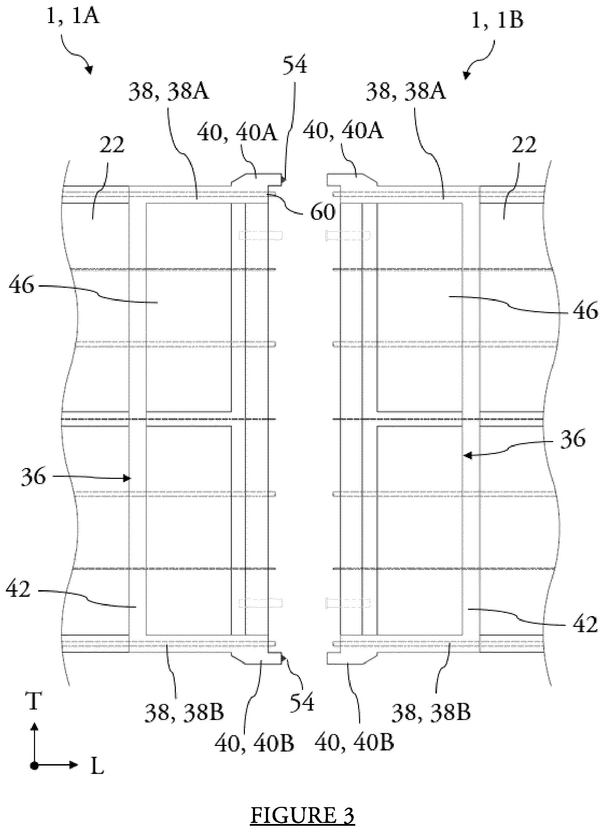

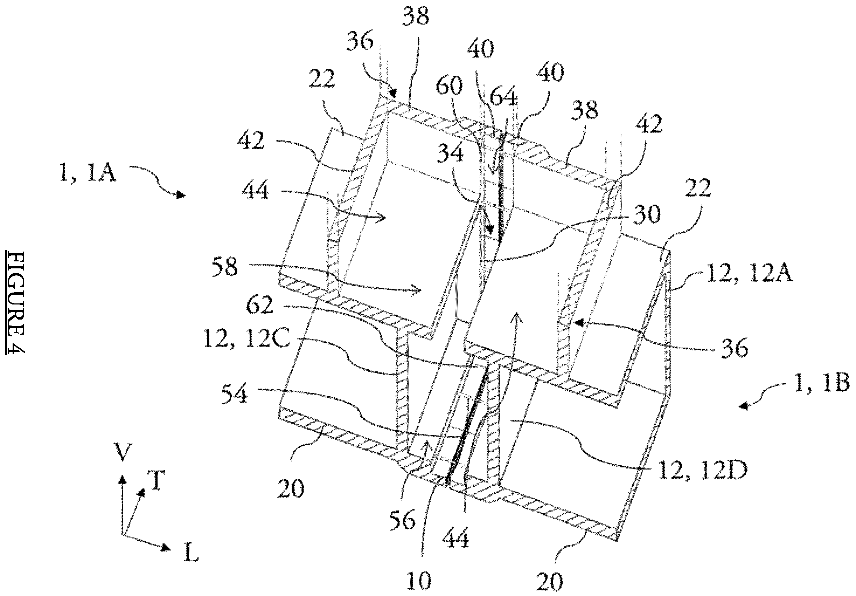

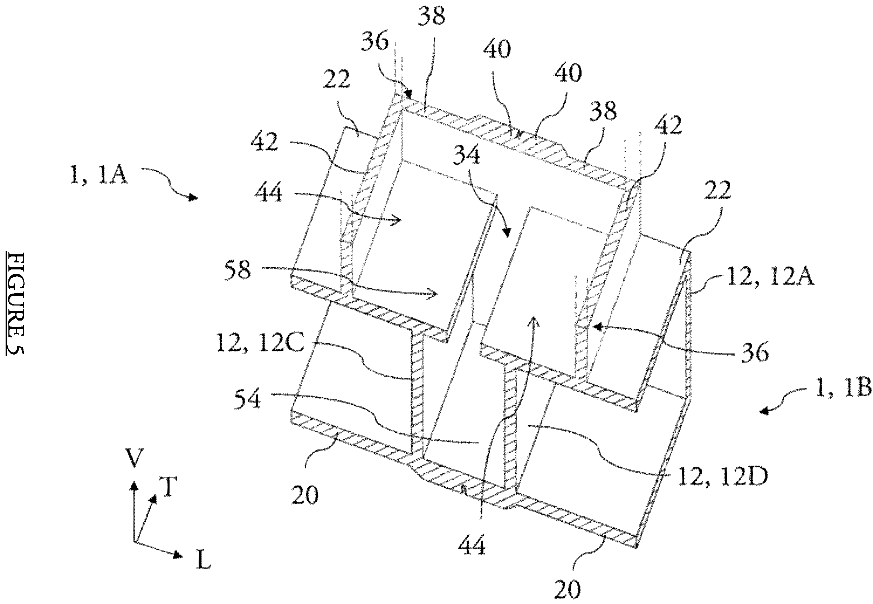

Le procédé d'assemblage de deux modules 1 en vue de former la structure 2 va maintenant être détaillé relativement aux figures 2 à 5 sur lesquelles sont illustrés un premier module 1A et un deuxième module 1B. Les figures 2 et 3 illustrent les modules 1 sur le point d'être associés, la figure 4 les illustre accolés l'un à l'autre et la figure 5 les illustre solidarisés l'un à l'autre. Si le procédé d'assemblage est ici décrit par rapport au premier mode de réalisation, il est similaire pour chacun des premier, deuxième et troisième modes de réalisation. Il est également à noter que si les figures illustrent ici deux modules 1 alignés l'un à l'autre, d'autres dispositions de ces modules 1 peuvent être envisagées, dès lors que ces modules 1 sont disposés de sorte que leurs extensions 34 et leurs prolongements 36 respectifs sont en regard les uns des autres. Ainsi, les modules 1 peuvent par exemple être associés selon une forme en « L », une forme en « T » ou encore une forme de croix, une extension et un prolongement étant ménagés à au moins une extrémité libre de ces exemples de forme, voire à toutes les extrémités libres.

L'association du premier module 1A et du deuxième module 1B permet d'assurer entre eux une continuité mécanique totale, et permet par ailleurs d'obtenir une structure 2 se comportant comme une structure monolithique.

Afin d'être associés, deux modules 1 sont tout d'abord disposés l'un en regard de l'autre tout en étant à distance l'un de l'autre, comme cela est notamment visible sur les figures 2 et 3. Ceci correspond à une étape d'alignement des modules 1. Plus spécifiquement, la première extrémité longitudinale 4 du premier module 1A est disposée en regard de la deuxième extrémité longitudinale 6 du deuxième module 1B. Au niveau de sa première extrémité longitudinale 4 le premier module 1A présente l'extension 34 et le prolongement 36, et à sa deuxième extrémité longitudinale 6 le deuxième module 1B présente similairement l'extension 34 et le prolongement 36. La cavité 35 et le logement interne 44 du premier module 1A sont ainsi disposés en regard de la cavité 35 et du logement interne 44 du deuxième module 1B.

Il est à noter que le premier module 1A est porteur, sur un bord libre de l'extension 34 ainsi que sur une extrémité terminale de la portion en saillie 40 non solidaire de la cloison 38, d'un dispositif d'étanchéité 54, par exemple un joint d'étanchéité. On comprend ici que le dispositif d'étanchéité 54 forme l'extrémité la plus distale du premier module 1A. Le dispositif d'étanchéité 54 s'étend ici de façon continue le long de la première portion en saillie 40A, de l'extension 34 portée par la première paroi latérale 12A, de l'extension portée par le fond 20, de l'extension 34 portée par la deuxième paroi latérale 12B et de la deuxième portion en saillie 40B. Alternativement, le deuxième module 1B pourrait porter ce dispositif d'étanchéité 54, ou bien à la fois le premier module 1A et le deuxième module 1B pourraient être équipés d'un tel dispositif d'étanchéité 54.

Tel que cela est représenté en figure 4, le premier module 1A est ensuite accolé au deuxième module 1B. La première extrémité longitudinale 4 du premier module 1A est ainsi disposée au contact de la deuxième extrémité longitudinale 6 du deuxième module 1B. Un positionnement correct entre les deux modules 1 est par exemple assuré, au cours d'une étape de couplage amovible, par un bâti de liaison, non illustré ici, qui est une structure rigide au moins partiellement métallique. Le bâti de liaison est plus particulièrement disposé à cheval entre les deux modules 1, par exemple en appui à la fois sur la première paroi latérale 12A du premier module 1A et sur la première paroi latérale 12A du deuxième module 1B. Le positionnement entre les deux modules 1 peut en outre être assuré à l'aide de butées disposées sur chacun du premier module 1A et du deuxième module 1B.

Lors du rapprochement du premier module 1A et du deuxième module 1B, le dispositif d'étanchéité 54 est intercalé et au moins partiellement comprimé entre d'une part l'extension 34 et la portion en saillie 40 du premier module 1A et d'autre part l'extension 34 et la portion en saillie 40 du deuxième module 1B.

Lorsque le premier module 1A et le deuxième module 1B sont accolés l'un à l'autre, la cavité 35 du premier module 1A et la cavité 35 du deuxième module 1B forment un creux 56 entre le premier module 1A et le deuxième module 1B. Autrement dit, un volume du creux 56 correspond à la somme du volume de la cavité 35 du premier module 1A et du volume de la cavité 35 du deuxième module 1B. Ce creux 56 est délimité longitudinalement par la première paroi latérale d'extrémité 12C du premier module 1A et la deuxième paroi latérale d'extrémité 12D du deuxième module 1B. En outre, le creux 56 est délimité transversalement d'une part par la première extension 34A portée par la première paroi latérale 12A du premier module 1A et par la deuxième extension 34B portée par la première paroi latérale 12A du deuxième module 1B, et d'autre part par la première extension 34A portée par la deuxième paroi latérale 12B du premier module 1A et par la deuxième extension 34B portée par la deuxième paroi latérale 12B du deuxième module 1B.

De la même façon, les prolongements 36 du premier module 1A et du deuxième module 1B sont joints, le logement interne 44 du premier module 1A et le logement interne 44 du deuxième module 1B étant rassemblés de sorte à former une chambre 58 entre le premier module 1A et le deuxième module 1B. Un volume de cette chambre 58 est égal à la somme du volume du logement interne 44 du premier module 1A et du volume du logement interne 44 du deuxième module 1B. La chambre 58 est de ce fait délimitée longitudinalement par le muret 42 du premier prolongement 36A du premier module 1A et par le muret 42 du deuxième prolongement 36B du deuxième module 1B. La chambre 58 est de plus délimitée transversalement d'une part par la première cloison 38A et la première portion en saillie 40A du premier module 1A et la première cloison 38A et la première portion en saillie 40A du deuxième module 1B, et d'autre part par la deuxième cloison 38B et la deuxième portion en saillie 40B du premier module 1A et la deuxième cloison 38B et la deuxième portion en saillie 40B du deuxième module 1B.

Du fait de cette chambre 58, et puisque les logements internes 44 communiquent avec les cavités 35, un accès au creux 56 par des opérateurs du module 1 est possible. Un tel accès est notamment nécessaire pour mettre en œuvre une étape de liaison mécanique entre le premier module 1A et le deuxième module 1B, notamment afin de relier leurs armatures métalliques 10 respectives. Les armatures métalliques 10 font saillie des flancs 30A de la première paroi latérale 12A et de la deuxième paroi latérale 12B, de sorte à s'étendre au sein du creux 56. Des armatures métalliques 10 font également saillie d'extrémités libres 60 de la première cloison 38A et de la deuxième cloison 38B, de sorte à s'étendre au sein de la chambre 58. Selon leur positionnement selon la direction verticale V, les armatures métalliques 10 s'étendent principalement, au sein du creux 56, le long d'une face intérieure de l'extension 34 ou bien, au sein de la chambre 58, le long d'une face intérieure de la portion en saillie 40. La liaison mécanique entre les armatures métalliques 10 du premier module 1A et les armatures métalliques 10 du deuxième module 1B est par exemple assurée à l'aide d'un coupleur.

En sus des armatures métalliques 10, les modules 1 sont arrimés l'un à l'autre au moyen de gaines de précontrainte 62, chacun du premier module 1A et du deuxième module 1B présentant de telles gaines de précontrainte 62. Ces gaines de précontrainte sont notamment référencées en figure 4. Elles s'étendent ici entre les armatures métalliques 10 et sont destinées à recevoir des câbles de précontrainte. Les gaines de précontrainte 62 du premier module 1A et les gaines de précontrainte 62 du deuxième module 1B sont par exemple reliées par des manchons creux. Un effort de traction est ensuite appliqué sur les câbles de précontrainte renfermés au sein des gaines de précontrainte 62, ce qui a pour effet de rapprocher les modules 1 et de les comprimer.

Afin d'assurer une continuité mécanique totale entre le premier module 1A et le deuxième module 1B, du béton à l'état liquide est coulé entre les deux modules 1 au cours d'une étape de coulage. Plus précisément, le béton est coulé au sein d'une zone de réception 64 ménagée au sein du creux 56 et de la chambre 58. Cette zone de réception 64 est délimitée longitudinalement par les flancs 30 des parois latérales 12 au niveau du creux 56 et par les extrémités libres 60 des cloisons 38 au niveau de la chambre 56. La zone de réception 64 est délimitée transversalement par les portions en saillie 40. La couche de béton est configurée pour présenter une épaisseur, c'est-à-dire une dimension mesurée le long de la direction transversale T, sensiblement égale à une épaisseur, des parois latérales 12A, c'est-à-dire leur dimension mesurée entre leur face interne 16 et leur face externe 18 parallèlement à la direction transversale T.

Entre les deux modules 1, les armatures métalliques 10 et les gaines de précontrainte 62 s'étendent au sein de cette zone de réception 64. Le béton est ainsi coulé dans la zone de réception 62 de sorte à enfouir les armatures métalliques 10 et les gaines de précontrainte 62. Le béton utilisé pour relier les modules 1 est par exemple d'une composition identique au béton utilisé dans la structure principale 8 des modules 1. Une fois le béton solidifié, la résistance mécanique et la cohésion des deux modules 1 sont assurées. Le premier module 1A et le deuxième module 1B reliés par du béton coulé au sein de la zone de réception 64 est illustré en figure 5.

La présente invention propose ainsi un module destiné à être au moins en partie immergé, configuré pour être assemblé à un ou plusieurs autres modules en vue de former une structure destinée à être au moins partiellement immergée, le module comprenant un prolongement vertical qui permet d'assurer des fonctions de stabilisation et/ou de fonctionnalisation au sein du module et par extension de la structure. Ces fonctions de stabilisation et/ou de fonctionnalisation sont notamment assurées en augmentant une dimension verticale du module, le prolongement vertical pouvant selon les besoins et les modes de réalisation s'étendre au-dessus d'un corps principal du module ou au-dessous de celui-ci.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Module destiné à être au moins en partie immergé (1, 1A, 1B), s'étendant entre une première extrémité longitudinale (4) et une deuxième extrémité longitudinale (6) et comprenant un fond (20) et une pluralité de parois latérales (12, 12A, 12B, 12C, 12D) définissant un volume interne (14), le module (1, 1A, 1B) comprenant au moins une extension (34, 34A, 34B) s'étendant, à l'une des extrémités longitudinales (4, 6), à partir d'une face externe (18) de l'une des parois latérales (12, 12A, 12B, 12C, 12D), le module (1, 1A, 1B) comprend au moins un prolongement (36, 36A, 36B) qui s'étend au moins dans un plan d'allongement principal de l'extension (34, 34A, 34B) et au-delà d'un plan dans lequel s'inscrivent des bords (32, 32A, 32B) des parois latérales (12, 12A, 12B, 12C, 12D).

2. Module (1, 1A, 1B) selon la revendication précédente, dans lequel le prolongement (36, 36A, 36B) s'étend au moins le long d'un plan sécant à un plan au fond (20).

3. Module (1, 1A, 1B) selon l'une quelconque des revendications précédentes, dans lequel le prolongement (36, 36A, 36B) comprend au moins une cloison (38, 38A, 38B) qui s'étend dans un plan commun à un plan d'allongement principal de la paroi latérale (12, 12A, 12B) porteuse de l'extension (34, 34A, 34B) et une portion (40, 40A, 40B) faisant saillie de la cloison (38, 38A, 38B) et s'étendant dans le plan d'allongement principal de l'extension (34, 34A, 34B).

4. Module (1, 1A, 1B) selon la revendication précédente, dans lequel les parois latérales (12, 12A, 12B, 12C, 12D) comprennent une première paroi latérale (12, 12A) et une deuxième paroi latérale (12, 12B) s'étendant dans des plans distincts, le prolongement (36, 36A, 36B) comprenant une première cloison (38, 38A) qui s'étend dans un plan commun à un plan d'allongement principal de la première paroi latérale (12, 12A), une deuxième cloison (38, 38B) qui s'étend dans un plan commun à un plan d'allongement principal de la deuxième paroi latérale (12, 12B), et un muret (42) joignant la première cloison (38, 38A) et la deuxième cloison (38, 38B).

5. Module (1, 1A, 1B) selon l'une quelconque des revendications précédentes, comprenant un plafond (22) reliant les parois latérales (12, 12A, 12B, 12C, 12D) à l'opposé du fond (20) et participant à délimiter le volume interne (14).

6. Module (1, 1A, 1B) selon la revendication précédente en combinaison avec la revendication 4, dans lequel le plafond (22) comprend une portion qui forme un plancher (46) du prolongement (36, 36A, 36B), le plancher (46), les cloisons (38, 38A, 38B) et le muret (42) délimitant au moins partiellement un logement interne (44) du prolongement (36, 36A, 36B).

7. Module (1, 1A, 1B) selon l'une quelconque des revendications précédentes en combinaison avec la revendication 4, dans lequel le fond (20) comprend une portion qui forme un toit (50) du prolongement (36, 36A, 36B), le toit (50), les cloisons (38, 38A, 38B) et le muret (42) délimitant au moins partiellement un logement interne (44) du prolongement (36, 36A, 36B).

8. Module (1, 1A, 1B) selon l'une quelconque des revendications précédentes, dans lequel les parois latérales (12, 12A, 12B, 12C, 12D) comprennent au moins une paroi latérale d'extrémité (12, 12C, 12D) solidaire de la paroi latérale (12, 12A, 12B) à partir de laquelle s'étend l'extension (34, 34A, 34B), la paroi latérale d'extrémité (12, 12C, 12D) et l'extension (34, 34A, 34B) participant à délimiter une cavité (35).

9. Module (1, 1A, 1B) selon la revendication précédente, dans lequel le muret (42) s'étend dans un plan d'allongement principal de la paroi latérale d'extrémité (12, 12C, 12D).

10. Module (1, 1A, 1B) selon la revendication 8, dans lequel le muret (42) s'étend principalement dans un plan parallèle et distinct à un plan d'allongement principal de la paroi latérale d'extrémité (12, 12C, 12D).

11. Module (1, 1A, 1B) selon l'une quelconque des revendications 8 à 10 en combinaison avec l'une quelconque des revendications 6 et 7, dans lequel le logement interne (44) est ouvert sur la cavité (35).

12. Module (1, 1A, 1B) selon l'une quelconque des revendications précédentes, dans lequel le prolongement (36, 36A, 36B) est amovible.

13. Module (1, 1A, 1B) selon l'une quelconque des revendications 1 à 11, dans lequel l'extension (34, 34A, 34B) et le prolongement (36, 36A, 36B) sont issus de matière.

14. Module (1, 1A, 1B) selon l'une quelconque des revendications précédentes comprenant une zone de réception (64) configurée pour recevoir du béton, la zone de réception (64) étant délimitée par un flanc longitudinal (30, 30A, 30B) de la paroi latérale (12, 12A, 12B) porteuse de l'extension (34, 34A, 34B) et une face intérieure de l'extension (34, 34A, 34B).

15. Module (1, 1A, 1B) selon l'une quelconque des revendications précédentes, comprenant un corps principal (8) en béton.

16. Structure destinée à être au moins en partie immergée (2), comprenant au moins un premier module (1, 1A, 1B) selon l'une quelconque des revendications précédentes et un deuxième module (1, 1A, 1B) selon l'une quelconque des revendications précédentes.

17. Structure (2) selon la revendication précédente, dans laquelle le prolongement (36, 36A, 36B) et l'extension (34, 34A, 34B) du premier module (1, 1A, 1B) sont en regard du prolongement (36, 36A, 36B) et de l'extension (34, 34A, 34B) du deuxième module (1, 1A, 1B), la structure (2) comprenant un dispositif d'étanchéité (54) intercalé entre d'une part le prolongement (36, 36A, 36B) et l'extension (34, 34A, 34B) du premier module (1, 1A, 1B) et d'autre part le prolongement (36, 36A, 36B) et l'extension (34, 34A, 34B) du deuxième module (1, 1A, 1B).
